# EUROPÄISCHE PATENTSCHRIFT

(11) **EP 1 531 144 B1**
(45) Veröffentlichungstag und Bekanntmachung des Hinweises auf die Patenterteilung: **26.07.2006**
(21) Anmeldenummer: 04026842.7
(22) Anmeldetag: 11.11.2004
(51) Int. Cl.: B67D 1/14, F16L 27/08

(54) **Getränkezapfanlage**
Beverage dispenser assembly
Tête de tireuse

(30) Priorität: 12.11.2003 DE 10353100
(43) Veröffentlichungstag der Anmeldung: 18.05.2005
(73) Patentinhaber: CMB Schankanlagen GmbH, 47809 Krefeld (DE)
(72) Erfinder: Becker, Carl Meinhard, 40885 Ratingen (DE)
(74) Vertreter: Knauf, Rudolf

(56) Entgegenhaltungen:
- DE-C1- 10 200 229
- US-B1- 6 227 579
- US-B1- 6 604 758

## Beschreibung

Die Erfindung betrifft eine Getränkezapfanlage, insbesondere Bierzapfanlage, mit einem Zapfhahn und einem dicht daran angeschlossenen rohrförmigen Anschlussnippel mit zwei Enden, dessen eines Ende zum Anschluss einer Getränkeleitung ausgebildet ist und dessen anderes Ende mittels eines das andere Ende umgebenden Verbindungselementes stirnseitig dicht und drehbar am Zapfhahn angeschlossen ist.

Derartige Zapfanlagen sind aus der Praxis in verschiedener Ausführung bekannt. Bei einer aus der DE-102 00 229 bekannten Zapfanlage ist ein Anschlussnippel mittels eines als Überwurfmutter ausgebildeten Verbindungselementes an dem Anschlussstutzen eines Zapfhahns drehbar angeschlossen. Dabei weist der Anschlussstutzen eine äußere und eine dazu axial zurückversetzte innere ringförmige Stirnfläche auf, wobei jeweils durch eine Ringdichtung der Anschlussnippel gegen die innere Stirnfläche und die Überwurfmutter gegen die äußere Stirnfläche abgedichtet ist. Nachteilig an dieser Zapfanlage ist insbesondere der komplizierte, eine Vielzahl von Einzelteilen umfassende Aufbau der Abdichtung zwischen dem Anschlussnippel und dem Zapfhahn, welcher mechanisch anfällig ist und nicht zuletzt eine Reinigung des Anschlussnippels und des Zapfhahns erschwert.

Der Erfindung liegt daher die Aufgabe zugrunde, eine Getränkezapfanlage der eingangs genannten Art zu schaffen, die einen einfach gestalteten und damit robusten Anschluss einer Getränkeleitung an einen Zapfhahn vorsieht.

Die Aufgabe wird bei einer Getränkezapfanlage gemäß dem Oberbegriff des Anspruches 1 erfindungsgemäß dadurch gelöst, dass für die stirnseitige Abdichtung eine Dichtung vorgesehen ist, die sowohl die Abdichtung an der Stirnseite des Anschlussnippels als auch an der mindestens annähernd in der Ebene der Stirnseite des Anschlussnippels liegenden Stirnseite des Verbindungselementes bewirkt.

Durch die erfindungsgemäß ausgebildete Abdichtung des Anschlussnippels und des Verbindungselementes an der entsprechenden Dichtfläche des Zapfhahns wird ein vollständig flüssigkeitsdichter und mechanisch dauerhaft belastbarer Anschluss für eine Getränkeleitung geschaffen, welcher infolge der Drehbarkeit des Anschlussnippels relativ zum Zapfhahn auch in montiertem Zustand des Anschlussnippels ein hohes Maß an Flexibilität bei der Aufstellung der Zapfanlage oder beispielsweise beim Anschluss eines Bierfasses ermöglicht. Bei dem Anschluss der Getränkeleitung an den Zapfhahn wird die stirnseitige Abdichtung des Anschlussnippels und des Verbindungselementes durch eine einheitliche Dichtung erreicht. Dies ermöglicht einen im Vergleich zum Stand der Technik einfacheren Aufbau sowohl des Anschlussnippels als auch des Zapfhahns sowie eine verbesserte und mechanisch unempfindlichere Abdichtung.

Nach einer ersten Ausgestaltung der Erfindung ist vorgesehen, dass das Verbindungselement drehfest an den Zapfhahn angeschlossen ist und eine Öffnung aufweist, in der der Anschlussnippel drehbar gelagert ist. Hierdurch lässt sich ein sicherer Anschluss des Anschlussnippels am Zapfhahn und gleichzeitig eine stets leichtgängige Drehbarkeit des Anschlussnippels auch bei festem Sitz des Verbindungselementes im Anschluss des Zapfhahns ermöglichen, da die jeweiligen Kontaktflächen, über die die drehbare Lagerung des Anschlussnippels einerseits und dessen dichter Anschluss an den Zapfhahn andererseits realisiert sind, voneinander funktional und räumlich getrennt sind.

Die drehbare Lagerung des Anschlussnippels in dem Verbindungselement kann auf verschiedene Weise verwirklicht sein. Gemäß einer besonders vorteilhaften Ausgestaltung der Erfindung weist dazu der Anschlussnippel mindestens eine Ringnut auf, in die jeweils ein in der Öffnung des Verbindungselementes vorgesehener ringförmiger Steg eingreift. Dies ermöglicht eine annähernd spielfreie Lagerung des Anschlussnippels im Verbindungselement und damit eine hohe mechanische Belastbarkeit des Anschlussnippels beispielsweise gegenüber einem auf sein freies Ende ausgeübten Moment.

Der Anschlussnippel seinerseits ist bevorzugt aus Edelstahl gefertigt und weist nach einer weiteren nützlichen Ausgestaltung der Erfindung zwischen seinen beiden Enden einen gebogenen mittleren Bereich auf, wobei der Biegewinkel vorzugsweise ca. 90° beträgt. Dadurch kann ein über den Anschlussnippel mit dem Zapfhahn verbundenes Ende einer Getränkeleitung auch im montierten Zustand einfach verschwenkt werden, wodurch besonders wirkungsvoll der Bildung von Knicken in der Leitung entgegengewirkt werden kann.

Nach einer weiteren vorteilhaften Ausgestaltung der Erfindung ist das Verbindungselement mit einem Außengewinde versehen, welches in den Zapfhahn einschraubbar ist. Durch die Schraubverbindung wird jederzeit ein fester Sitz des Verbindungselementes in dem Leitungsanschluss gewährleistet. Ein besonders einfaches Einschrauben des Verbindungselementes in den Zapfhahn ohne Zuhilfenahme von Werkzeug ist insbesondere dann möglich, wenn das Verbindungselement im Querschnitt im wesentlichen die Form eines regelmäßigen Sechsecks aufweist, so dass es griffgünstig von Hand eingeschraubt werden kann.

Gemäß einer weiteren vorteilhaften Lehre der Erfindung ist das Verbindungselement axial in mindestens zwei vorzugsweise gleich große Teile aufgeteilt, welche miteinander verbindbar sind und dann gemeinsam das Ende des Anschlussnippels aufnehmen. Dies erlaubt insbesondere im Falle der Nut-Feder-Verbindung zwischen Anschlussnippel und Verbindungselement einen besonders einfachen Zusammenbau dieser Bauteile. Die Kontaktfläche beider Teile kann dabei eben ausgebildet sein, aber alternativ auch gewellt oder mit einer Zick-Zack-Kontur versehen sein, um ein Einpassen der Teile ineinander zu erleichtern. Hinsichtlich einer konkreten Ausgestaltung erweist es sich sinnvoll, wenn das Verbindungselement entlang einer Axialebene hälftig bis auf einen gemeinsamen Rand in zwei Teile geteilt ist, wobei die zwei Teile zum Zwecke der Verbindung mit dem Anschlussnippel zusammenklappbar sind. Das Verbindungselement kann somit einstückig gefertigt und in einem sehr einfachen Arbeitsschritt vom Anwender mit verschieden geformten (gerade, winklig etc.) Anschlussnippeln verbunden werden. Dies ermöglicht eine kostengünstige Lagerhaltung bei einer Vielzahl von Anschlussmöglichkeiten. Bevorzugt wird das Verbindungselement aus Kunststoff hergestellt. Dies ermöglicht insbesondere eine kostengünstige Fertigung in hohen Stückzahlen.

Zum Zwecke eines flüssigkeitsdichten Anschlusses einer Getränkeleitung, insbesondere eines Bierschlauches, an den Anschlussnippel weist dieser an dem dafür ausgebildeten Ende bevorzugt eine Rippenstruktur auf.

Im folgenden wird die Erfindung anhand einer lediglich ein Ausführungsbeispiels darstellenden Zeichnung näher erläutert. Es zeigen:
- Fig. 1: einen Ausschnitt einer Getränkezapfanlage mit einem Zapfhahn, einem daran angeschlossenen rohrförmigen Anschlussnippel mit Verbindungselement und einer Getränkeleitung in Seitenansicht,
- Fig. 2: die Anschlussverbindung zwischen dem Anschlussnippel und dem Zapfhahn der Bierzapfanlage aus Fig. 1 in vergrößerter seitlicher Schnittansicht
- Fig. 3: den Anschlussnippel mit Verbindungselement aus Fig. 1 in Seitenansicht,
- Fig. 4: den Anschlussnippel mit Verbindungselement aus Fig. 1 in einer gegenüber Fig. 3 um 90° gedrehten seitlichen Ansicht und
- Fig. 5: den Anschlussnippel aus Fig. 1 mit einem aus zwei Teilen bestehenden Verbindungselement in einer perspektivischen Ansicht.

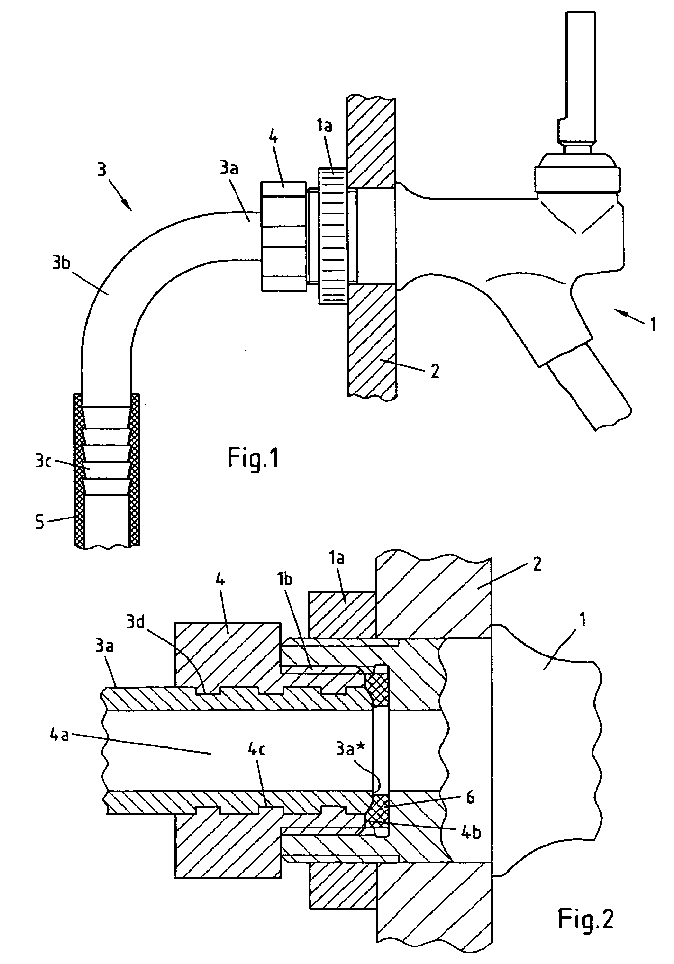

Die in der Fig. 1 dargestellte als Bierzapfanlage ausgebildete Getränkezapfanlage umfasst einen über eine Rändelmutter 1a an einem Halter 2 befestigten Zapfhahn 1, einen mittels eines Verbindungselementes 4 an den Zapfhahn 1 dicht angeschlossenen Anschlussnippel 3 sowie eine an den Anschlussnippel 3 angeschlossene Getränkeleitung in Form eines Bierschlauches 5. Der vorzugsweise aus Edelstahl gefertigte Anschlussnippel 3 ist rohrförmig ausgebildet und umfasst seinerseits zwei Enden 3a, 3c sowie einen dazwischen liegenden mittleren Bereich 3b, welcher vorzugsweise um 90° gebogen ist. Auf das Ende 3c des Anschlussnippels ist der Bierschlauch 5 aufgeschoben. Dazu weist das Ende 3c bevorzugt eine Rippenstruktur auf, die ein unbeabsichtigtes Abziehen des Bierschlauches 5 erschwert.

Wie in der vergrößerten Schnittansicht der Fig. 2 erkennbar, ist das Ende 3a des Anschlussnippels 3 in einer in dem Verbindungselement 4 ausgebildeten Öffnung 4a drehbar gelagert. Dazu weist der Anschlussnippel an seinem Ende 3a drei Ringnuten 3d auf, in die drei entsprechend in der Öffnung 4a des Verbindungselementes 4 vorgesehene Stege 4c eingreifen. Dies ermöglicht eine annähernd spielfreie Lagerung und damit eine hohe mechanische Belastbarkeit des am Zapfhahn 1 befestigten Anschlussnippels 3. Der Vorteil insbesondere mehrerer in verschiedenen Axialebenen liegender Nuten/Stege besteht darin, dass sich in diesem Fall eine besonders gute Führung des Anschlussnippels ergibt, was wiederum eine möglichst geringe Belastung der Dichtung zur Folge hat.

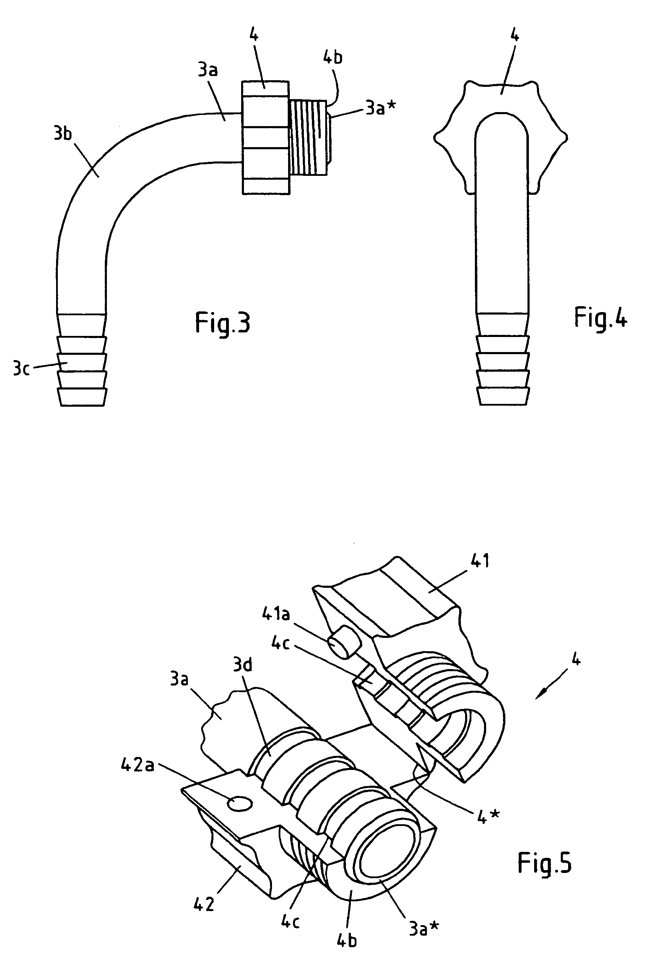

Das Verbindungselement 4 seinerseits ist vorzugsweise aus Kunststoff gefertigt und mittels eines Außengewindes 4c in den Anschluss 1b des Zapfhahns 1 derart eingeschraubt, dass es mit seiner Stirnseite 4b gegen eine in dem Zapfhahnanschluss 1b vorgesehene als Dichtring 6 ausgebildete Dichtung presst. Zudem weist das Verbindungselement 4 zur Erleichterung des Einschraubens oder Lösens im Querschnitt gesehen im wesentlichen die Form eines regelmäßigen Sechsecks auf (s. Fig. 4).

Erfindungsgemäß sind das Verbindungselement und das Ende 3a des Anschlussnippels relativ zueinander derart gelagert, dass das stirnseitige Ende 3a* des Anschlussnippels 3 und die Stirnseite 4b des Verbindungselementes 4 mindestens annähernd in einer Ebene liegen, so dass der Dichtring 6 sowohl die Abdichtung an der Stirnseite 3a* des Anschlussnippels 3 als auch an der Stirnseite 4b des Verbindungselementes 4 bewirkt. Bevorzugt überragt die Stirnseite 3a* des Anschlussnippels 3 dabei die Stirnseite 4b des Verbindungselementes 4 geringfügig, so dass der Dichtring 6 durch die Stirnseite 3a* zusätzlich eingedrückt wird. Durch die in der Fig. 2 dargestellte Anordnung wird eine vollständig flüssigkeitsdichte und vergleichsweise einfach aufgebaute Abdichtung sowohl des Anschlussnippels 3 als auch des Verbindungselementes 4 geschaffen, die zudem mechanisch äußerst robust ist, da die die Drehbarkeit des Anschlussnippels 3 einerseits und seine Abdichtung andererseits bewirkenden Kontaktflächen räumlich und funktional voneinander getrennt sind.

Gemäß der in der Fig. 5 dargestellten bevorzugten Ausführungsform des Verbindungselementes 4 ist dieses entlang einer Axialebene hälftig bis auf einen gemeinsamen Rand 4* in zwei Teile 41, 42 geteilt, wobei die zwei Teile 41, 42 zum Zwecke der Verbindung mit dem Anschlussnippel 3 zusammenklappbar sind und im zusammengeklappten Zustand das Ende 3a des Anschlussnippels 3 umgeben. Vorzugsweise weist das eine Teil 41 eine vorstehende Rastnase 41a auf, die in ein in dem anderen Teil 42 entsprechend vorgesehenes Sackloch 42a eingreift und damit beide Teile 41, 42 durch eine Verrastung fest miteinander verbindet. Auch hierbei ist es im Hinblick auf eine kostengünstige Massenfertigung vorteilhaft, wenn das Verbindungselement 4 aus Kunststoff, insbesondere als Spritzgussteil, gefertigt ist.

## Patentansprüche

1. Getränkezapfanlage, insbesondere Bierzapfanlage, mit einem Zapfhahn (1) und einem dicht daran angeschlossenen rohrförmigen Anschlussnippel (3) mit zwei Enden (3a, 3c), dessen eines Ende (3c) zum Anschluss einer Getränkeleitung (5) ausgebildet ist und dessen anderes Ende (3a) mittels eines das andere Ende (3a) umgebenden Verbindungselementes (4) stirnseitig dicht und drehbar am Zapfhahn (1) angeschlossen ist,
**dadurch gekennzeichnet, dass**
für die stirnseitige Abdichtung eine Dichtung (6) vorgesehen ist, die sowohl die Abdichtung an der Stirnseite (3a*) des Anschlussnippels (3) als auch an der mindestens annähernd in der Ebene der Stirnseite (3a*) des Anschlussnippels (3) liegenden Stirnseite (4b) des Verbindungselementes (4) bewirkt.

2. Getränkezapfanlage nach Anspruch 1,
**dadurch gekennzeichnet, dass**
das Verbindungselement (4) drehfest an den Zapfhahn (1) angeschlossen ist und eine Öffnung (4a) aufweist, in der der Anschlussnippel (3) drehbar gelagert ist.

3. Getränkezapfanlage nach Anspruch 2,
**dadurch gekennzeichnet, dass** der Anschlussnippel (3) mindestens eine Ringnut (3d) aufweist, in die jeweils ein in der Öffnung (4a) des Verbindungselementes (4) vorgesehener ringförmiger Steg (4c) eingreift.

4. Getränkezapfanlage nach einem der Ansprüche 1 bis 3,
**dadurch gekennzeichnet, dass**
der Anschlussnippel (3) zwischen seinen Enden (3a, 3c) einen gebogenen mittleren Bereich (3b) aufweist.

5. Getränkezapfanlage nach Anspruch 4,
**dadurch gekennzeichnet, dass**
der Biegewinkel ca. 90° beträgt.

6. Getränkezapfanlage nach einem der Ansprüche 1 bis 5,
**dadurch gekennzeichnet, dass**
das Verbindungselement (4) ein Außengewinde aufweist, welches in den Zapfhahn (1) einschraubbar ist.

7. Getränkezapfanlage nach einem der Ansprüche 1 bis 6,
**dadurch gekennzeichnet, dass**
das Verbindungselement (4) im Querschnitt im wesentlichen die Form eines regelmäßigen Sechsecks aufweist.

8. Getränkezapfanlage nach einem der Ansprüche 1 bis 7,
**dadurch gekennzeichnet, dass**
das Verbindungselement (4) axial in mindestens zwei vorzugsweise gleich große Teile (41, 42) aufgeteilt ist, welche miteinander verbindbar sind und dann gemeinsam das Ende (3a) des Anschlussnippels (3) aufnehmen.

9. Getränkezapfanlage nach Anspruch 8,
**dadurch gekennzeichnet, dass**
das Verbindungselement (4) entlang einer Axialebene hälftig bis auf einen gemeinsamen Rand (4*) in zwei Teile (41, 42) geteilt ist, wobei die zwei Teile (41, 42) zum Zwecke der Verbindung mit dem Anschlussnippel (3) zusammenklappbar sind.

10. Getränkezapfanlage nach einem der Ansprüche 1 bis 9,
**dadurch gekennzeichnet, dass**
das Verbindungselement (4) aus Kunststoff gefertigt ist.

11. Getränkezapfanlage nach einem der Ansprüche 1 bis 10,
**dadurch gekennzeichnet, dass**
der Anschlussnippel (3) aus Edelstahl gefertigt ist.

12. Getränkezapfanlage nach einem der Ansprüche 1 bis 11,
**dadurch gekennzeichnet, dass**
das Ende (3c) des Anschlussnippels (3) eine Rippenstruktur für die Verbindung mit einem Getränkeschlauch (5) aufweist.

## Claims

1. Drink tap unit, in particular beer tap unit, comprising a draw-off tap (1) and a tubular connecting nipple (3), connected thereto in a sealing manner, with two ends (3a, 3c), of which one end (3c) is configured for connection of a drink line (5) and of which the other end (3a) is connected to the draw-off tap (1), by means of a connecting element (4) surrounding the other end (3a), so as to be sealed at the end face and so as to be rotatable, **characterised in that** a seal (6), which brings about both sealing at the end face (3a*) of the connecting nipple (3) and at the end face (4b) of the connecting element (4), located at least approximately in the plane of the end face (3a*) of the connecting nipple (3), is provided for end face sealing.

2. Drink tap unit according to Claim 1, **characterised in that** the connecting element (4) is non-rotatably connected to the draw-off tap (1) and comprises an opening (4a) in which the connecting nipple (3) is rotatably mounted.

3. Drink tap unit according to Claim 2, **characterised in that** the connecting nipple (3) comprises at least one annular groove (3d) in which a respective annular web (4c) provided in the opening (4a) of the connecting element (4) engages.

4. Drink tap unit according to any one of Claims 1 to 3, **characterised in that**, between its ends (3a, 3c), the connecting nipple (3) comprises a bent middle region (3b).

5. Drink tap unit according to Claim 4, **characterised in that** the bending angle is approximately 90°.

6. Drink tap unit according to any one of Claims 1 to 5, **characterised in that** the connecting element (4) comprises an external thread which can be screwed into the draw-off tap (1).

7. Drink tap unit according to any one of Claims 1 to 6, **characterised in that**, in cross-section, the connecting element (4) substantially has the form of a regular hexagon.

8. Drink tap unit according to any one of Claims 1 to 7, **characterised in that** the connecting element (4) is divided axially into at least two preferably equal size parts (41, 42) which can be connected to each other and subsequently jointly receive the end (3a) of the connecting nipple (3).

9. Drink tap unit according to Claim 8, **characterised in that**, along an axial plane, the connecting element (4), except for a common edge (4*), is divided in half into two parts (41, 42), it being possible to fold the two parts (41, 42) for the purpose of connection to the connecting nipple (3).

10. Drink tap unit according to any one of Claims 1 to 9, **characterised in that** the connecting element (4) is manufactured from plastics material.

11. Drink tap unit according to any one of Claims 1 to 10, **characterised in that** the connecting nipple (3) is manufactured from stainless steel.

12. Drink tap unit according to any one of Claims 1 to 11, **characterised in that** the end (3c) of the connecting nipple (3) comprises a ribbed structure for connecting to a drink hose (5).

## Revendications

1. Appareil distributeur de boisson, en particulier appareil distributeur de bière, avec une cannelle (1) et un raccord fileté (3) tubulaire, y raccordé de manière étanche avec deux extrémités (3a, 3c), dont une extrémité (3c) est formée pour le raccord à une conduite de boisson (5) et l'autre extrémité (3a) est raccordée sur la face à l'aide d'un élément de liaison (4) entourant l'autre extrémité (3a), de manière étanche et de manière rotative à la cannelle (1), **caractérisé en ce que** pour l'étanchéification côté face, est prévu un joint (6), qui effectue non seulement l'étanchéification sur la face avant (3a*) du raccord fileté (3), mais également sur la face avant (4b) de l'élément de liaison (4), se trouvant au moins sensiblement dans le plan de la face avant (3a*) du raccord fileté.

2. Appareil distributeur de boisson selon la revendication 1, **caractérisé en ce que** l'élément de liaison (4) est raccordé à la cannelle (1) de manière résistante à la torsion et présente une ouverture (4a), dans laquelle le raccord fileté (3) est disposée de manière rotative.

3. Appareil distributeur de boisson selon la revendication 2, **caractérisé en ce que** le raccord fileté (3) présente au moins une rainure pour anneau de retenue (3d), dans laquelle s'engrène chaque fois, une arrête (4c) annulaire prévue dans l'ouverture (4a) de l'élément de liaison (4).

4. Appareil distributeur de boisson selon l'une des revendications 1 à 3, **caractérisé en ce que** le raccord fileté (3) présente entre ses deux extrémités (3a, 3c), une zone moyenne courbée (3b).

5. Appareil distributeur de boisson selon la revendication 4, **caractérisé en ce que** l'angle de courbure s'élève à environ 90°.

6. Appareil distributeur de boisson selon l'une des revendications 1 à 5, **caractérisé en ce que** l'élément de liaison (4) présente un filet extérieur, qui peut être vissé dans la cannelle (1).

7. Appareil distributeur de boisson selon l'une des revendications 1 à 6, **caractérisé en ce que** l'élément de liaison (4) présente en coupe transversale, essentiellement la forme d'un hexagone régulier.

8. Appareil distributeur de boisson selon l'une des revendications 1 à 7, **caractérisé en ce que** l'élément de liaison (4) est divisé de manière axiale, en au moins deux parties (41, 42), de préférence de même taille, qui peuvent être reliées l'une à l'autre et acceptent en commun, l'extrémité (3a) du raccord fileté (3).

9. Appareil distributeur de boisson selon la revendication 8, **caractérisé en ce que** l'élément de liaison est divisé le long d'un plan axial, de moitié jusqu'à un bord commun (4*), en deux parties (41, 42), où les deux parties (41, 42) sont pliables pour la liaison avec le raccord fileté (3).

10. Appareil distributeur de boisson selon l'une des revendications 1 à 9, **caractérisé en ce que** l'élément de liaison (4) est préparé en une matière plastique.

11. Appareil distributeur de boisson selon l'une des revendications 1 à 10, **caractérisé en ce que** le raccord fileté (3) est préparé en acier spécial.

12. Appareil distributeur de boisson selon l'une des revendications 1 à 11, **caractérisé en ce que** l'extrémité (3c) du raccord fileté (3) présente une structure nervurée pour la liaison avec un tuyau de boisson (5).
